(19) Europäisches Patentamt
European Patent Office
Office européen des brevets

(11) **EP 1 120 740 B1**

(12) **EUROPEAN PATENT SPECIFICATION**

(45) Date of publication and mention
of the grant of the patent:
**03.10.2007 Bulletin 2007/40**

(51) Int Cl.:
***G06N 3/00*** *(2006.01)*      ***A63H 3/38*** *(2006.01)*
***A63H 3/00*** *(2006.01)*      ***A63H 11/00*** *(2006.01)*
***B25J 13/00*** *(2006.01)*

(21) Application number: **00925597.7**

(22) Date of filing: **10.05.2000**

(86) International application number:
**PCT/JP2000/002990**

(87) International publication number:
**WO 2000/068879 (16.11.2000 Gazette 2000/46)**

(54) **ROBOT DEVICE, ITS CONTROL METHOD, AND RECORDED MEDIUM**

ROBOTERVORRICHTUNG, STEUERVERFAHREN UND AUFZEICHNUNGSMEDIUM

DISPOSITIF ROBOT, SON PROCEDE DE COMMANDE ET SUPPORT D'ENREGISTREMENT

(84) Designated Contracting States:
**DE FR GB**

(30) Priority: **10.05.1999 JP 12927999**

(43) Date of publication of application:
**01.08.2001 Bulletin 2001/31**

(73) Proprietor: **Sony Corporation**
**Tokyo 141-0001 (JP)**

(72) Inventors:
• **INOUE, Makoto,**
**Sony Corporation**
**Tokyo 141-0001 (JP)**
• **YAMAGISHI, Takeshi**
**Sony Corporation**
**Tokyo 141-0001 (JP)**

(74) Representative: **Pilch, Adam John Michael et al**
**D Young & Co**
**120 Holborn**
**London EC1N 2DY (GB)**

(56) References cited:
**JP-A- 63 192 423**        **JP-U- 64 019 492**

• **HIROMI KANEKO: 'Pet robot, wo kaibo, 16 jiyudo, 56 dosa no entertainment-4 soku jiritsu gata' ELECTRONICS vol. 4, no. 3, 01 March 1998, pages 34 - 35, XP002945879**
• **HIROKI KITANO ET AL: 'Sony legged robot for robocup challenge' 1998 IEEE INTERNATIONAL CONFERENCE ON ROBOTICS AND AUTOMATION vol. 3, 16 May 1998 - 20 May 1998, pages 2605 - 2612, XP002930719**
• **DATABASE INSPEC ON STN INSTITUTE OF ELECTRICAL ENGINEERS (STEVENGE, GB) ACC. NO. C9809-7810-026 WEI-MIN SHEN ET AL.: 'Building integrated robots for soccer competition', XP002945892 & PROCEEDINGS INTERNATIONAL CONFERENCE ON MULTI AGENT SYSTEMS 03 July 1998 - 07 July 1998, pages 465 - 466**

**Description**

The present invention relates to a robot and its control method and recording medium, and is suitably applied to a pet robot.

In recent years, a four-legged walking pet robot that performs actions autonomically responding to the direction from the user and the surrounding environment has been developed by the applicant of the present invention. Such pet robot has the similar shape to dogs and cats being raised in general households and acts responding to the direction from the user and the surrounding environment.

In such pet robot, if the emotion such as "anger" and "joy" can be expressed in response to the action of the user such as "hit" and "pat", the user can communicate with the pet robot smoothly. Hence, it is considered that the user's affection and curiosity to the pet robot can be improved and entertainment factor can be further improved.

The present invention was devised in the light of the above and seeks to provide a robot and its control method and recording medium capable of further improving the entertainment factor.

Japanese Patent Application Publication JP-A-63 192 423 discloses a robot generally according to the pre-characterising part of claim 1 hereof.

Japanese Utility Model JP-U-64 019 492 discloses a doll amusement device in which eyes are formed by flashing light emitting diodes.

The present invention provides a robot according to claim 1 hereof, a robot control method according to claim 9 hereof, and a recording medium according to claim 14 hereof.

Thus, communications between the user and the robot can be conducted smoothly and a robotic device, control method and recording medium capable of further improving the entertainment factor can be realized.

The invention will now be further described, by way of illustrative example, with reference to the accompanying drawings, in which:

Fig. 1 is a perspective view showing the construction of a pet robot according to the embodiment of the present invention.
Fig. 2 is a block diagram showing the construction of a pet robot.
Fig. 3 is a perspective view showing the construction of LED.

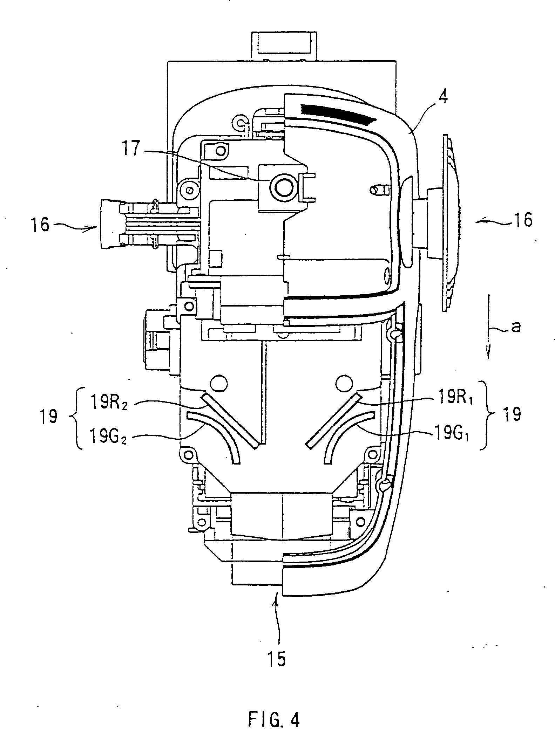

Fig. 4 is a perspective view showing the construction of LED.
Fig. 5 is a block diagram illustrating the processing of controller.
Fig. 6 is a brief linear diagram illustrating each emotion.

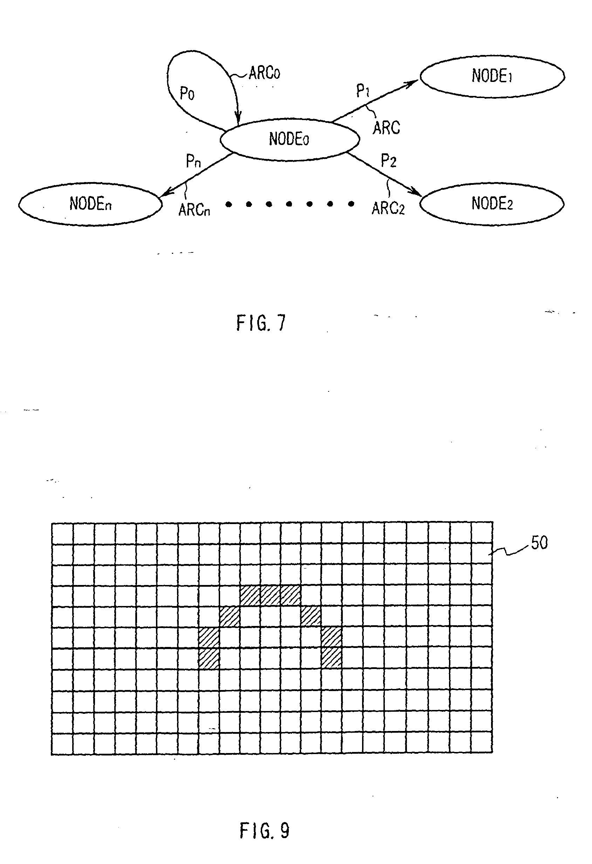

Fig. 7 is a conceptual diagram illustrating the probability automaton.
Fig. 8 is a conceptual diagram showing the condition transition table.

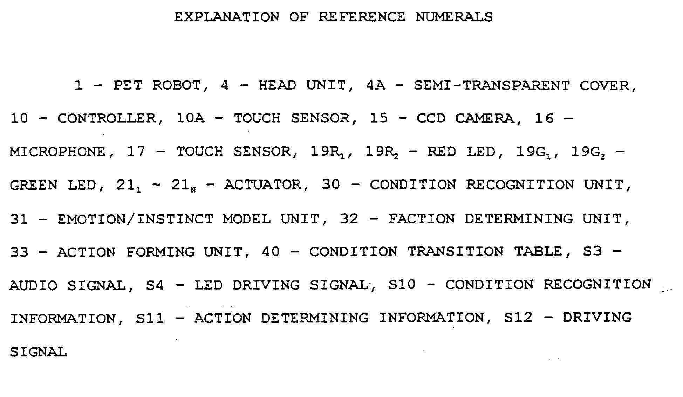

Fig. 9 is a brief linear diagram illustrating the other embodiment.

With reference to the accompanying drawings one embodiment of the present invention will be described in detail hereunder.

(1) Construction of Pet Robot 1 according to the Embodiment of the Present Invention

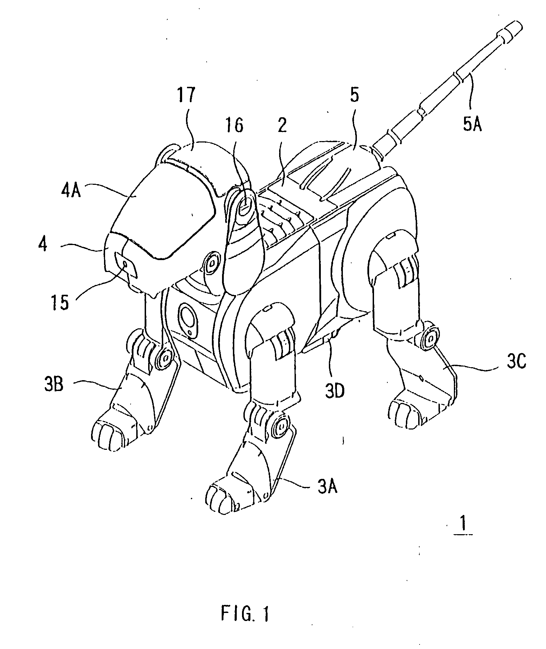

In Fig. 1, 1 generally shows a pet robot according to the embodiment of the present invention. And this pet robot 1 is comprised of leg units 3A ~ 3D connected respectively to the front and back and left and right of the body unit 2, and a head unit 4 and a tail unit 5 connected respectively to the front edge part and the rear edge part of the body unit 2.

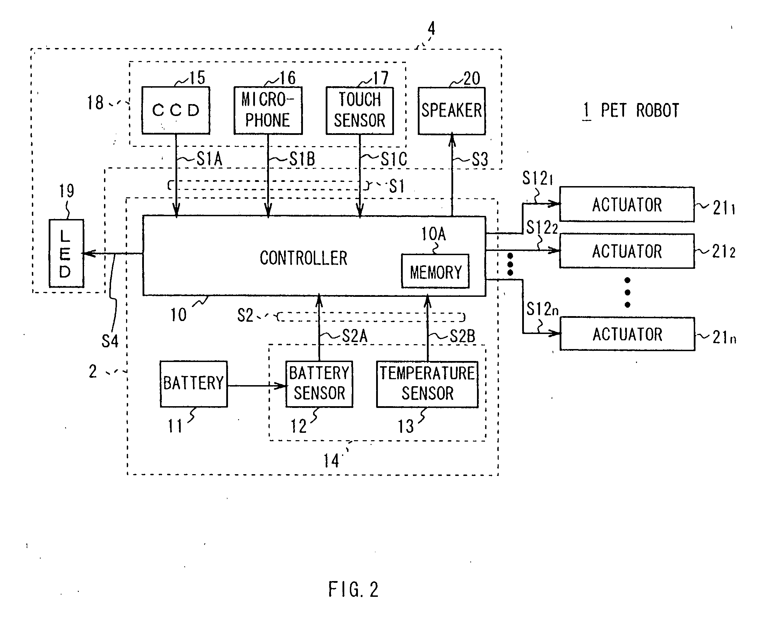

In this case as shown in Fig. 2, a controller 10 for controlling the whole operation of this pet robot 1 and a battery 11 as the power source of this pet robot 1, and an internal sensor unit 14 comprised of a battery sensor 12 and a temperature sensor 13 are stored in the body unit 2.

Moreover, in the head unit 4 a CCD (charge coupled device) camera 15 which functions as actual "eyes", an external sensor unit 18 comprised of a microphone 16 to function as ears and a touch sensor 17, and LED (light emitting diode) 19 to function as "eyes" for the sake of appearance, and a speaker 20 to function as "mouth) are placed respectively on the predetermined positions.

Furthermore, actuators $21_1$ ~ $21_n$ for several degrees of freedom are placed respectively to the joints of leg units 3A ~ 3D, the connecting parts of leg units 3A - 3D and the body unit 2, the connecting part of the head unit 4 and the body unit 2, and the root part of the tail 5A in the tail unit 5 (Fig. 1).

Then, the CCD camera 15 of the head unit 4 shoots picture of surrounding condition, and transmits the resultant image signal S1A to the controller 10. Moreover, the microphone 16 collects the command sounds such as "walk", "lie-down" or "chase after a ball" to be given from the user as musical scales via a sound commander (not shown in Fig.) and transmits the resultant audio signal S1B to the controller 10.

Furthermore, as it is clear in Fig. 1, the touch sensor 17 is provided on the upper part of the head unit 4, and detects the pressure received by the physical action such as "pat" and "hit" from the user and outputs the detection result to the controller 10 as a pressure detection signal S1C.

Furthermore, the battery sensor 12, detecting the remaining quantity of the battery 11, outputs the detection result to the controller 10 as a battery remaining quantity detection signal S2A. While the temperature sensor 13 detects the internal temperature of the pet robot 1 and transmits the detection result to the controller 10 as a temperature detection signal S2B.

The controller 10 judges the surrounding and internal condition of the pet robot 1, directions from the user, and the existence or non-existence of actions from the user based on the image signal S1A, audio signal S1B and the pressure detection signal S1C (hereinafter these are all together referred to as external sensor signal S1) to be supplied respectively from the CCD camera 15, the microphone 16 and the touch sensor 17 of the external sensor unit 18, and the battery remaining quantity detection signal S2A and the temperature detection signal S2B (hereinafter these are all together referred to as internal sensor signal S2) to be supplied respectively from the battery sensor and the heat sensor of the internal sensor unit 14.

Then, the controller 10 determines the following action based on this judgement result and the control program stored in the memory 10A in advance, and by driving necessary actuators $21_1 \sim 21_n$ based on the determined result, makes the head unit 4 swing up and down, and right and left, or makes the tail of the tail unit 5 swing, or driving each of leg units 3A - 3D, makes the robot walk.

Furthermore, in this case, by giving the predetermined audio signal S3 to the speaker 20 as required, the controller 10 outputs sounds based on said audio signal S3 to outside, or by outputting the LED driving signal S4 to the LED 19 as "eyes" in appearance, it makes the LED 19 flash.

Accordingly, this pet robot 1 can act autonomously based on the surrounding and internal condition and the existence or non-existence of the command or approach from the user.

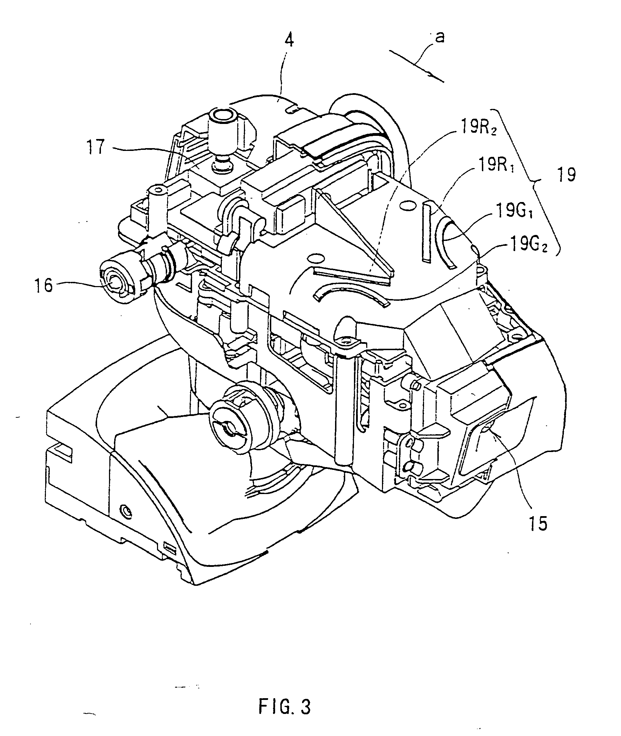

Hence the detailed construction of the LED 19 as "eyes" for the sake of appearance of the pet robot 1 will be shown in Fig. 3. As is clear from Fig. 3, the LED 19 comprises a pair of red colors LED $19R_1$ and $19R_2$ emitting red light respectively and a pair of green colors LED $19G_1$ and $19G_2$ emitting green light respectively.

In this case, each of red colors LED $19R_1$ and $19R_2$ of which the light emitting unit has a rectilinear shape with the predetermined length. And these are placed approximately on the middle stage in the longitudinal direction of the head unit 4 so that these becomes closer as proceeding frontward of the head unit 4 shown by an arrow a. Thus, in this pet robot 1, by lighting up these red LED $19R_1$ and $19R_2$ together, this pet robot 1 can show the expression of "anger" as if it gets angry turning up its eyes.

Furthermore, each of green colors LED $19G_1$ and $19G_2$ of which the light emitting unit has an arc shape with the predetermined length. And these are placed on the immediately proceeding places of the corresponding red colors LED $19R_1$ and $19R_2$ on the head unit 4 placing inside of the arc in the front direction (an arrow a). With this arrangement, by lighting up these red colors LED $19G_1$, $19G_2$ together, this pet robot can show the expression of "joy" as if it is laughing.

In this pet robot 1, the upper part of the box body from the near front edge of the head unit 4 to the immediately before the touch sensor 17 is covered with the black semi-transparent cover 4A formed of such as synthetic resin so that these red colors LED $19R_1$, $19R_2$ and green colors LED $19G_1$, $19G_2$ are covered up.

Thus, in this pet robot, these are difficult to be confirmed from the outside when the LED 19 is not lighted up. On the other hand, when the LED 19 is lighted up, these can be easily confirmed visually from the outside. Thereby, the feeling of physical disorder caused by the exposure of "eyes" of two kinds (red color LED $19R_1$, $19R_2$ and green color LED $19G_1$, $19G_2$) can be effectively avoided.

In this connection, in this pet robot 1, the optical axis of the CCD camera 15 which functions as actual "eyes" are placed in parallel with an arrow a on the edge part of the head unit 4. Thus, the front condition to which the head unit 4 is faced can be certainly photographed by this CCD camera 1.

(2) Processing of Controller 10

Next, the processing of controller 10 in the pet robot 1 will be described in detail as follows:

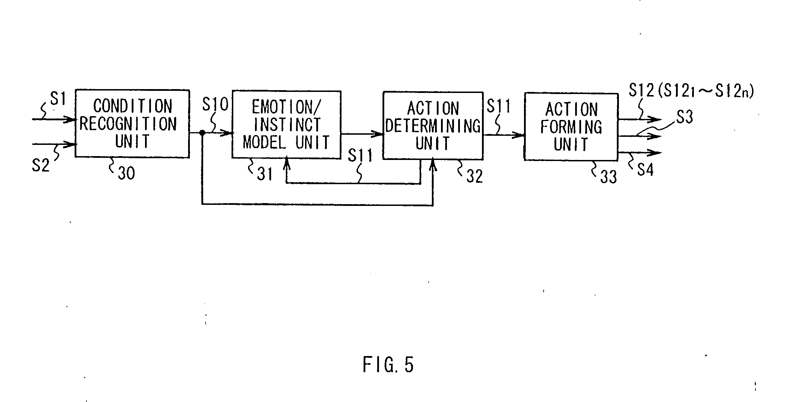

The controller 10 executes various processings as described above according to the control program stored in the memory 10A. And the processing contents of this controller 10 can be classified according to the functions as shown in Fig. 5; i.e., a condition recognition unit 30 for recognizing external and inner conditions, an emotion/instinct model unit 31 for determining the condition of feeling and instinct based on the recognition result of the condition recognition unit 30, an action determining unit 32 for determining the succeeding action based on the recognition result of the condition recognition unit 30 and the output of the emotion/instinct model unit 31, and an action forming unit 33 for making the pet robot form the action corresponding to the determination result of the action determining unit 32.

Then, these condition recognition unit 30, the motion/instinct model unit 31, the action determining unit 32 and the action forming unit 33 will be described in detail as follows.

(2-1) Construction of Condition Recognition Unit 30

The condition recognition unit 30 recognizes the specific condition based on the external information signal S1 to be given from the external sensor unit 18 (Fig. 2) and the internal information signal S2 to be given from the internal sensor unit 14 (Fig. 2) and notifies the recognition result to the motion/instinct model unit 31 and the action determining unit 32 as a condition recognition information S10.

In practice, the condition recognition unit 30 constantly monitors the image signal S1A given from the CCD camera 15 (Fig. 2) of the external sensor unit 18. And when it detects such as "red round article" or "vertical plane", it recognizes that "there is a ball" or "there is a wall" and notifies the recognition result to the emotion/instinct model unit 31 and the action determining unit 32.

Furthermore, the condition recognition unit 30 constantly monitors the audio signal S1B to be given from the microphone 16 (Fig. 2). And when it recognizes that the command sound such as "walk", "lie down", or "chase after a ball" is entered based on the audio signal S1B, it notifies the recognition result to the emotion/instinct model unit 31 and the action determining unit 32.

Furthermore, the condition recognition unit 30 constantly monitors the pressure detection signal S1C (Fig. 2) to be given from the touch sensor 17 (Fig. 2). And when it detects the pressure of more than the predetermined threshold value and the short period of time (such as less than 2 seconds), it recognizes that "it is hit (is scolded)". And when it detects the pressure of less than the predetermined threshold value and the long period of time (such as over 2 seconds), it recognizes that "it is patted (it is praised)" and notifies the recognition result to the emotion/instinct model unit 31 and the action determining unit 32.

Furthermore, the condition recognition unit 30 constantly monitors the temperature detection signal S2B (Fig. 2) to be given from the temperature sensor 13 (Fig. 2) of the internal sensor unit 14 (Fig. 2). And when it detects the temperature of more than predetermined temperature, it recognizes that "internal temperature has gone up" and informs the recognition result to the emotion/instinct model unit 31 and the action determining unit 32. (2-2) Construction of Emotion/Instinct Model Unit 31

The emotion/instinct model unit 31 holds the parameter to show the strength of emotional action on the total of 6 emotional actions, "joy", "sadness", "surprise", "fear", "disgust" and "anger", in each emotional action. Then the emotion/instinct model unit 31 successively updates the parameter value of each emotional action based on the specific recognition result such as "is hit" and "is patted" to be given from the condition recognition unit 30 respectively as the condition recognition information S10, the action determining information S12 showing the determined output action to be given from the action determining unit 32 and the time elapsed.

More specifically, based on the degree of recognition result to be obtained based on the condition recognition information S10 and the output action based the action determining information S12 act upon that emotional action (that is preset) and the degree of control and stimulation received from the other emotional action, the emotion/instinct model unit 31 calculates the parameter value of the emotional action in the following cycle E [t + 1] in utilizing the following EQUATION:

$$E [t + 1] = E [t] + k_0 \times \Delta E [t] \qquad \ldots \ldots \quad (1)$$

Where the quantity of change of emotional action to be calculated by the predetermined Equation = E [t];
The current parameter value of emotional action = E [t];
Coefficient showing the degree of change its emotional action corresponding to the recognition result = $k_0$.

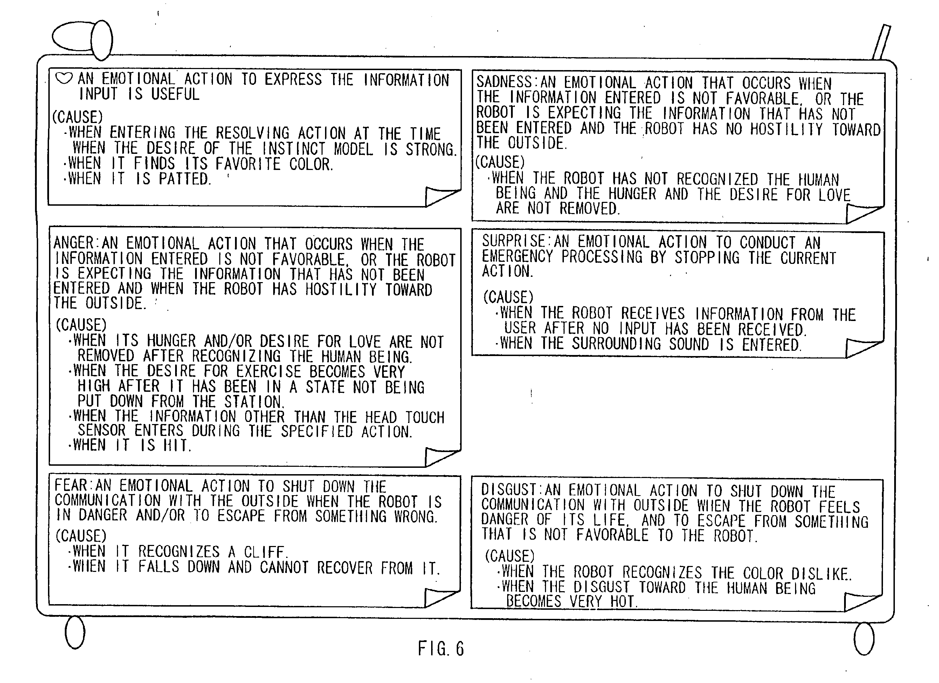

Then, the emotion/instinct model unit 31 updates the parameter value of that emotional action by replacing this calculation result with the current parameter value of emotional activity E [t]. In this connection, which emotional action parameter value to each recognition result and each output activity would be updated is predetermined. For example, when the recognition result such as "hit" is given, the parameter value of emotional action of "anger" rises and the parameter of emotional action of "joy" drops. And when the recognition result such as "patted" is given, the parameter of emotional action of "joy" rises and the parameter value of emotional action "sadness" drops. In this connection, more detailed explanations on each emotional action and an example of concrete causes that these emotional actions vary will be shown in Fig. 6.

Similarly, the emotion/instinct model unit 31 holds the parameter showing the strength of desire per desire on four independent desires, "desire for exercise", "desire for love", "appetite for food" and "curiosity". Then the emotion/instinct model unit 31 successively updates these parameter values of desires based on the recognition result from the condition recognition unit 30, the time elapsed and the notice from the action determining unit 32.

More specifically, the emotion/instinct model unit 31 calculates the parameter value of the desire I [k + 1] in the following cycle using the following EQUATION at the fixed cycle based on the output action of the pet robot 1, the time elapsed and the recognition result on the "desire for exercise", "desire for love" and "curiosity".

$$\mathtt{I\ [k\ +\ 1]\ =\ I\ [k]\ +\ k_1\ x\ \Delta\ I\ [k]} \qquad\qquad \ldots\ \ldots\qquad (2)$$

where the quantity of desire change to be calculated by the predetermined Equation to be A I [k];
the parameter value of desire of subtraction to be I [k]; and
the coefficient showing the sensitivity of that desire to be $k_1$. And by replacing this calculation result with the current desire parameter value I [k], that desire parameter value will be updated. In this connection which desire parameter value to be changed is determined in advance. And when a notice informing that the action has been taken is received from the action determining unit 32, the parameter value of "desire for exercise" will drop.

Moreover, based on the battery remaining quantity detection signal S2A (Fig. 2) to be given via the condition recognition unit 30, the emotion/instinct model unit 31 calculates the parameter value of "appetite for food" I [k + 1] using the following EQUATION at the fixed cycle.

$$\mathtt{I\ [k]\ =\ 100\ -\ B_L} \qquad\qquad\qquad \ldots\ \ldots\qquad (3)$$

Where the remaining quantity of battery to be $B_L$
Then, the emotion/instinct model unit 31 updates the parameter value of "appetite for food" by replacing this calculation result with the current appetite parameter value I[k].

In this connection, according to the embodiment of the present invention, the parameter value of each motion and each desire is regulated so that these will change within the range from 0 to 100, and also coefficient values $k_0$ and $k_1$ are set individually per each emotion and each desire.

(2 - 3) Construction of Action Determining Unit 32

The action determining unit 32 determines the next action based on the condition recognition information S10 to be supplied from the condition recognition unit 30, the parameter value of each emotion and each desire in the emotion/instinct model unit 31, the action model stored in the memory 10A in advance and the time elapsed, and sends out the determination result to the emotion/instinct model unit 31 and the action forming unit 33 as the action determination information S12.

In this case, as a method to determine the next action, the action determining unit 32 uses the algorithm called as probability automaton for determining whether to transit from one node $NODE_0$ to the same or which other node $NODE_0 \sim NODE_n$ based on the transition probability $P_0 \sim P_n$ set respectively to arcs $ARC_0 \sim ARC_n$ connecting between each $NODE_0 \sim NODE_n$.

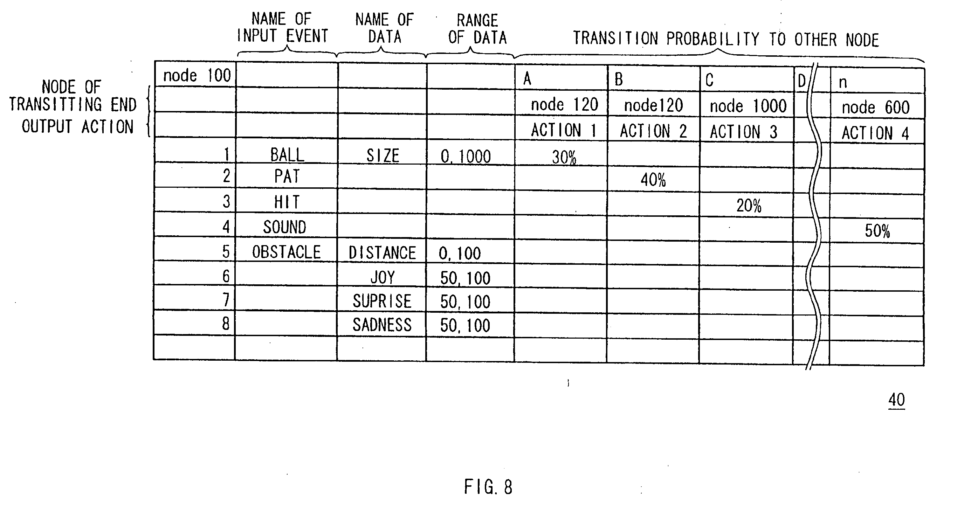

More specifically, a condition transition table 40 per each node $NODE_0 \sim NODE_n$ as shown in Fig. 8 is stored in the memory 10A as an action model, and the actin determining unit 32 determines the next action based on this condition transition table 40.

At this point, in the condition transition table 40, the input events (recognition result of the condition recognition unit 30) making the transition as prerequisite in that $NODE_0 \sim NODE_n$ are listed in the column of "Input Event" in priority order, and additional conditions on that condition are described on the corresponding lines in the columns of "Name of Data" and "Range of Data".

Accordingly, in the node $NODE_{100}$ defined in the condition transition table of Fig. 8, the following becomes the prerequisite for transferring to the self or the other node; i.e., when the recognition result "detected a ball (BALL)" is given, "size (SIZE)" of the ball to be given with said recognition result is in "the range from 0 to 1000 (0, 1000)", and when the recognition result "obstacle is detected (OBSTACLE)" is given, "the distance (DISTANCE)" to that obstacle to be given with said recognition result is "the range from 0 to 1000 (0, 1000)".

Furthermore, in this node $NODE_{100}$, even in the case where no recognition result is put in, when either one of parameter values of emotional actions "joy (JOY)", "surprise (SURPRISE)" or "sadness (SADNESS) among the parameter values of each emotional action and each desire of the emotion/instinct model unit 31 to which the action determining unit 32 refers periodically is in "the range from 50 to 100 (50, 100)", it can be transferred to its own or the other node.

Furthermore, in the condition transition table 40, names of nodes that can be transited from the node $NODE_0$

~ $NODE_n$ are listed in rows of "Node of transiting end" in the column of "Transit probability to other node". And simultaneously, the transit probability of that node $NODE_0$ ~ $NODE_n$ at the time when all conditions described in each line of "Name of input event", "Data value" and " Range of data" are satisfied will be described on the line of the node $NODE_0$ ~ $NODE_n$ in the column of "Transit probability to other node", and the action or motion to be output at this moment will be described on the line of "Output action". In this connection, the sum of transition probability of each line on the column of "Transition probability to other node" becomes 100[%].

Accordingly, regarding the node $NODE_{100}$ of this example, when the recognition result that "the size (SIZE)" of that ball is from "the range of 0 to 1000 (0, 1000)" is given, it can be transferred to "the node $NODE_{120}$ (node 120)" in the probability of "30 [%]", and at this moment, the action or motion of "ACTION" will be sent out.

Then, the action model is comprised of a number of nodes $NODE_0$ ~ $NODE_n$ described as the condition transition table 40 linked together.

With this arrangement, when the condition recognition information S10 is supplied from the condition recognition unit 30 and/or the fixed time has been elapsed since the action is conducted the last, the action determining unit 32 determines the next action or motion (action or motion described on the line of "Output action") in utilizing the condition transition table 40 of the corresponding node $NODE_0$ ~ $NODE_n$ from among action model stored in the memory 10A, and outputs the determination result to the emotion/instinct model unit 31 and the action forming unit 33 as the action determination information S12.

(2 - 3) Processing of Action Forming Unit 33

Based on the action determination information S12 to be given from the action determining unit, the action forming unit 33 transmits driving signals $S13_1$ ~ $S13_n$ to the necessary actuators $21_1$ ~ $21_n$ (Fig. 2), and transmits the necessary audio signal S3 to the speaker 20 (Fig. 2), and sends out the LED driving signal S4 to the LED 19.

Thus, based on the driving signals $13_1$ ~ $13_n$, the action forming unit 33 drives the necessary actuators $21_1$ ~ $21_n$ to the predetermined state, and/or outputs sounds based on the audio signal 3 from the speaker 20, and/or flashes the LED 19 with the flashing pattern based on the LED driving signal S3.

(3) Relationship between Emotion and "Eye" Flashing

Then, in this pet robot 1, the relation between the emotion expression and the flashing of LED 19 that functions as "eyes" for the sake of appearance will be described in the following paragraphs.

In this pet robot 1, the succeeding action and motion will be determined based on the corresponding condition transition table 40 (Fig. 8) in the action determining unit 32 that is one of functions of the controller 10 as described above.

In this case, the action to flash each green color LED $19G_1$, $19G_2$ out of LED 19 is connected to each output action (such as "ACTION 2" in Fig. 8) corresponded to the recognition result of "patted (PAT)".

Furthermore, at the time when the recognition result of "pat" is given from the condition recognition unit 30, the action determination unit 32 determines the succeeding action and motion in utilizing the corresponding condition transition table 40 as described above, and as well as transmitting the determined action and motion to the action forming unit 33 as the action determining information S12, reads the parameter value of "joy" in the emotion/instinct model unit 31, and informs this to the action forming unit 33.

Thus, at this moment, by driving the necessary actuators $21_1$ ~ $21_n$, the action forming unit 33 makes it act to express the specified "joy". And also or in place of this, it flashes each green color LED $19G_1$, $19G_2$ in order that the larger said value becomes the faster the flashing cycle becomes. With this arrangement, the pet robot 1 can express the emotion of "joy" as if it is laughing.

Similarly, the action to flash each red color LED $19R_1$ $19R_2$ in the LED 19 is connected to each output action (such as "ACTION 3" in Fig. 8) corresponded to the recognition result such as "hit (HIT)" in the condition transition table.

Furthermore, when the recognition result "hit" is supplied from the condition recognition unit 30, the action determining unit 32 determines the following action and motion using the corresponding condition transition table 40, and as well as sending the determined action and motion out to the action forming unit 33 as the action determination information S12, reads out the value of parameter of "anger" in the emotion/instinct model unit 31, and informs this to the action forming unit 33.

Thus, at this moment, the action forming unit 33, by driving the necessary actuator $21_1$ ~ $21_n$ based on the action determination information S12 to be given from the action determining unit 32, makes the robot act to express the specified "anger", and also or instead, makes each red color LED $19R_1$, $19R_2$ flash corresponding to the value of parameter of "anger" at that time so that the larger said value becomes the faster the flashing cycle becomes. With this arrangement, the pet robot 1 can express the emotion of "anger" as if it gets angry.

On the other hand, the action to flash each red color LED $19R_1$, $19R_2$ and each green LED $19G_1$, $19G_2$ of LED is connected to each output action (such as "ACTION 4" in Fig. 8) corresponded to the specific recognition result to express the predetermined "surprise" such as "large sound input (SOUND)" in the condition transition table 40.

Furthermore, when the action determining unit 32 is supplied with the specific recognition result to express "surprise" from the condition recognition unit 30, determines the following action and motion in utilizing the corresponding condition transition table 40 and informs the determination result to the action forming unit 33.

Thus, at this moment, the action forming unit 33, by driving the necessary actuator $21_1 \sim 21_n$ based on the action determination information S12 to be given from the action determining unit 32, makes the pet robot 1 conduct the action showing the specified "surprise" and simultaneously, flashes each red color LED $19R_1$, $19R_2$ and each green LED $19G_1$, $19G_2$ successively and alternately. Thus, the pet robot 1 can express the emotion of "surprise" by alternately repeating the expression of laughing and the expression of anger.

With the above arrangement, this pet robot 1 can express the emotion of "joy" to be "patted", the emotion of "anger" to be "hit", and the emotion of "surprise" to the specific recognition result by the flashing each of red LED $19R_1$, $19R_2$ and/or each green LED $19G_1$, $19G_2$ as expressions. LED $19G_1$, $19G_2$ as expressions.

(4) Operation and Effects of the Present Embodiment

According to the foregoing construction, in this pet robot 1 when the user hits the upper part (touch sensor 17) of the head unit 4, red LED $19R_1$ and $19R_2$ flash simultaneously and said robot expresses the emotion of "anger" as if it gets angry by turning up its eyes. On the other hand, when the user pats said robot, green LED $19R_1$, $19R_2$ simultaneously flash, and the robot expresses the emotion of "joy" as if it is laughing. Moreover, when loud sound is generated in the surrounding area, red LED $19R_1$, $19R_2$ and green LED $19G_1$, $19G_2$ flash alternately and the robot expresses the emotion of "surprise" as if it is surprised by opening and closing its eyes.

Accordingly, in this pet robot 1, the user can easily recognize the emotion condition of this pet robot 1 based on the flashing condition of LED 19. Moreover, since the robot expresses the emotion corresponding to the action of the user such as "pat" and "hit", communications between user and the robot can be more smoothly carried out.

According to the foregoing construction, since the emotion of the pet robot 1 is realized by flashing the LED 19 as "eyes" for the sake of appearance, the communication with the user can be more smoothly conducted, and thereby the pet robot capable of improving the entertainment factor remarkably can be realized.

(5) Other Embodiments

The embodiment described above has dealt with the case of applying the present invention to a four-legged walking pet robot 1 constructed as Fig. 1. However, the present invention is not only limited to this but also can be widely applied to the robotic device having various other shapes (including such as Toy).

Furthermore, the embodiment described above has dealt with the case of applying the LED 19 as the light emitting means. However, the present invention is not only limited to this but also in short, various other light emitting means that emit lights can be widely applied.

In such cases, such as the light emitting element 50 arranged in the array shape and color or black and white display can be applied. And also by applying these light emitting means, a variety of shapes can be displayed as eyes for the sake of appearance, and thereby, a variety of expressions can be expressed.

Furthermore, the embodiment described above has dealt with the case of expressing three (3) emotions (emotional actions), "joy", "anger" and "surprise" according to the light emitting condition of the LED 19 functioning as eyes for the sake of appearance. However, the present invention is not only limited to this but also in addition to these emotions or in place of these emotions, the other emotions (emotional actions) may be expressed according to the light emitting condition of the LED 19.

Moreover, the embodiment described above has dealt with the case of utilizing the LED for 2 colors of red LED $19R_1$, $19R_2$ and green LED $19G_1$, $19G_2$ as the LED 19. However, the present invention is not only limited to this but also the LED of one color or more than three colors may be prepared and these may be emitted the light with the predetermined light emitting pattern corresponding to emotions.

Furthermore, the embodiment described above has dealt with the case of making the flashing cycle of the LED 19 faster as the stronger the emotion becomes. However, the present invention is not only limited to this but also the brightness of light emitting of the LED 19 may be increased as the stronger the emotion becomes. In short, if the light emitting pattern of the LED 19 would be changed corresponding to the strength of emotion, various other light emitting patterns can be applied as the light emitting pattern.

Furthermore, the embodiment described above has dealt with the case of applying the CCD camera 15, microphone 16 and the touch sensor 17 as the external sensor for detecting the external condition and the external input. However, the present invention is not only limited to this but also, in short, if the sensor that can detect the external condition and the external input, various other sensors can be widely applied as external sensors in addition to and in place of these sensors.

Moreover, the embodiment described above has dealt with the case of applying the memory 10A as the recording medium for recording the control program in the pet robot 1. However, the present invention is not only limited to this but also, in short, if the recording medium that can record the control program and can reproduce this, various other recording media can be widely applied.

Furthermore, the embodiment described above has dealt with the case of placing the touch sensor 17 on the upper part of the head unit 4 of the pet robot 1. However, the present invention is not only limited to this but also the touch sensor may be placed on the other place. However, by arranging the touch sensor 17 on the forehead or the vertex of the head part, communications between the pet robot 1 and the user can be easily conducted and makes the user easily transfer his feelings toward the pet robot 1. And this is apparent experimentally and from experience.

Furthermore, the embodiment described above has dealt with the case of applying the touch sensor 17 as the means for detecting the motion from the user such as "hit" or "pat". However, the present invention is not only limited to this but also a switch may be placed in place of the touch sensor 17. And detecting the motion such as "hit" from the user by on/off of said switch, the LED 19 may be flashed based on said detection result, and the emotion of pet robot may be expressed.

INDUSTRIAL APPLICABILITY

The present invention can be applied to an entertainment robot such as a pet robot.

**Claims**

1.  A robot (1) comprising:

    a light emitting means (19) for functioning as eyes for the sake of appearance;
    an external sensor (18) for detecting an external condition and/or an input from outside; and
    a control means (10) for generating a control signal for said light emitting means, in order to express an emotion, based on an output of said external sensor (18);

    **characterised in that** said control means (10) comprises a model unit (31) operative to model a variable parameter in order to express a desire of the robot and to cause said control signal to be a function of the strength of said variable parameter.

2.  A robot as defined in claim 1, wherein said light emitting means (19) is a light emitting diode.

3.  A robot as defined in claim 1or claim 2, wherein said control means (10) is operative to generate a control signal that expresses the strength of said emotion by a flashing pattern of said light emitting means (19).:

4.  A robot as defined in claim 1 or claim 2, comprising a plurality of light emitting means (19R, 19G) operative to emit light of different colors, respectively, wherein said control means (10) is operative to generate a control signal that expresses said emotion by the colour of flashing light emitted by said light emitting means.

5.  A robot as defined in claim 1 or claim 2, comprising a moving unit and a driving means for driving said moving unit, wherein said control means (10) is operative to generate a control signal that expresses said emotion by controlling said driving means and driving said moving unit with a predetermined pattern in addition to causing said light emitting means to flash.

6.  A robot as defined in claim 1or claim 2, wherein said control means (10) is operative to:

    update an emotion model in said model unit (31) in which a pre-held emotion is modeled based on the output of said external sensor (18);
    determine the emotion based on the updated emotion model; and
    flash said light emitting means (19) so that said determined emotion will be expressed.

7.  A robot as defined in claim 1 or claim 2, wherein said light emitting means has light emitting units of a plurality of shapes according to said emotion to be expressed.

8.  A robot as defined in any one of the preceding claims, wherein said light emitting means (19) is placed on a head (4) of the robot and covered with a semi-transparent cover.

9. A control method for a robot (1) comprising light emitting means (19) to function as eyes for the sake of appearance and an external sensor (18) for detecting an external condition and/or an input from outside, the method comprising generating (10) a control signal for said light emitting means (19), in order to express an emotion, based on an output of said external sensor (18), and the method being **characterised by** modelling (31) a variable parameter in order to express a desire of the robot and causing said control signal to be a function of the strength of said variable parameter.

10. A control method as defined in claim 9, wherein the strength of said emotion is expressed by a flashing pattern of said light emitting means (19).

11. A control method as defined in claim 9, for a robot comprising multiple light emitting means (19R, 19G) that emit light of different colors, respectively, wherein the emotion is expressed by the color of flashing light emitted by said light emitting means.

12. A control method as defined in claim 9, for a robot comprising a moving unit and a driving means for driving said moving unit, wherein said emotion is expressed by controlling said driving means and driving said moving unit in addition to causing said light emitting means (19) to flash.

13. A control method as defined in claim 9, comprising:

updating an emotion model in which a pre-held emotion is modeled based on the output of said external sensor (18);
determining emotion based on the updated emotion model; and
flashing said light emitting means (19) so that said determined emotion will be expressed.

14. A recording medium in which a control program for a robot (1) having light emitting means (19) to function as eyes for the sake of appearance and an external sensor (18) for detecting an external condition and/or an input from the outside is recorded, the control program comprising the steps of a method according to any one of claims 9 to 13.

**Patentansprüche**

1. Roboter (1), der aufweist:

eine licht-emittierende Einrichtung (19), welche der Erscheinungsform zuliebe als Augen arbeitet;
einen externen Sensor (18) zum Erfassen eines externen Zustands und/oder eines Eingangssignals von außerhalb; und
eine Steuereinrichtung (10) zum Erzeugen eines Steuersignals für die licht-emittierende Einrichtung, um eine Emotion auf Basis eines Ausgangssignals des externen Sensors (18) auszudrücken;

dadurch gekennzeichnet, dass die Steuereinrichtung (10) eine Modelleinheit (31) aufweist, die betriebsfähig ist, einen variablen Parameter zu modellieren, um einen Wunsch des Roboters auszudrücken und um zu bewirken, dass das Steuersignal eine Funktion der Intensität des variablen Parameters ist.

2. Roboter nach Anspruch 1, wobei die licht-emittierende Einrichtung (19) eine licht-emittierende Diode ist.

3. Roboter nach Anspruch 1 oder 2, wobei die Steuereinrichtung (10) betriebsfähig ist, ein Steuersignal zu erzeugen, welches die Intensität der Emotion durch ein aufflackerndes Musters der licht-emittierenden Einrichtung (19) ausdrückt.

4. Roboter nach Anspruch 1 oder 2, der mehrere licht-emittierende Einrichtungen (19R, 19G) aufweist, die betriebsfähig sind, Licht unterschiedlicher Farben entsprechend zu emittieren, wobei die Steuereinrichtung (10) betriebsfähig ist, ein Steuersignal zu erzeugen, welches die Emotion durch die Farbe des aufflackernden Lichts, welches durch die licht-emittierende Einrichtung emittiert wird, ausdrückt.

5. Roboter nach Anspruch 1 oder 2, der eine Bewegungseinheit und eine Ansteuereinheit, um die Bewegungseinheit anzusteuern, aufweist, wobei die Steuereinrichtung (10) betriebsfähig ist, ein Steuersignal zu erzeugen, welches die Bewegung ausdrückt, wobei die Ansteuereinrichtung gesteuert wird und die Bewegungseinheit mit einem vorher festgelegten Muster zusätzlich angesteuert wird, zu bewirken, dass die licht-emittierende Einrichtung aufflackert.

**6.** Roboter nach Anspruch 1 oder 2, wobei die Steuereinrichtung (10) betriebsfähig ist, um:

ein Emotionsmodell in der Modelleinheit (31) zu aktualisieren, in welcher eine vorher-gehaltene Emotion auf Basis des Ausgangssignals des externen Sensors (18) moduliert ist;
die Bewegung auf Basis des aktualisierten Bewegungsmodells zu erfassen; und
die licht-emittierende Einrichtung (19) aufflackern zu lassen, so dass die erfasste Emotion ausgedrückt wird.

**7.** Roboter nach Anspruch 1 oder 2, wobei die licht-emittierende Einrichtung licht-emittierende Einheiten mehrerer Formen gemäß der Emotion, die auszudrücken ist, hat.

**8.** Roboter nach einem der vorhergehenden Ansprüche, wobei die licht-emittierende Einrichtung (19) auf einem Kopf (4) des Roboters angeordnet ist und mit einer halbdurchlässigen Abdeckung übergedeckt ist.

**9.** Steuerverfahren für einen Roboter (1), der eine licht-emittierende Einrichtung (19), die der Erscheinungsform zuliebe als Augen arbeitet, und einen externen Sensor (18) aufweist, um einen externen Zustand und/oder eine Eingabe von außerhalb zu erfassen, wobei das Verfahren das Erzeugen (10) eines Steuersignals für die licht-emittierende Einrichtung (19) aufweist, um eine Emotion auf Basis eines Ausgangssignals des externen Sensors (18) auszudrücken, wobei das Verfahren **dadurch gekennzeichnet ist** durch Modellieren (31) eines variablen Parameters, um einen Wunsch des Roboters auszudrücken, und um zu Veranlassen, dass das Steuersignal eine Funktion der Intensität des variablen Parameters ist.

**10.** Steuerverfahren nach Anspruch 9, wobei die Intensität der Emotion durch ein aufflackerndes Musters der licht-emittierenden Einrichtung (19) ausgedrückt wird.

**11.** Steuerverfahren nach Anspruch 9 für einen Roboter, der eine Mehrfachlicht-Emissionseinrichtung (19R, 19G) aufweist, welche Licht unterschiedlicher Farben entsprechend emittiert, wobei die Emission durch die Farbe des aufflackernden Lichts ausgedrückt wird, welches durch die licht-emittierende Einrichtung emittiert wird.

**12.** Steuerverfahren nach Anspruch 9 für einen Roboter, der eine Bewegungseinheit und eine Steuereinrichtung aufweist, um die Bewegungseinheit anzusteuern, wobei die Emotion durch Steuern der Ansteuereinrichtung ausgedrückt wird, und die Bewegungseinheit zusätzlich angesteuert wird, um zu bewirken, dass die licht-emittierende Einrichtung (19) aufflackert.

**13.** Steuerverfahren nach Anspruch 9, welche aufweist:

Aktualisieren eines Emotionsmodells, in welchem eine vorher-gehaltene Emotion moduliert ist, auf Basis des Ausgangssignals des externen Sensors (18);
Erfassen von Emotion auf Basis des aktualisierten Emotionsmodells; und
Aufflackern der licht-emittierenden Einrichtung (19), so dass die erfasste Emotion ausgedrückt wird.

**14.** Aufzeichnungsmedium, bei dem ein Steuerprogramm für einen Roboter (1), der eine licht-emittierende Einrichtung (19), welche der Erscheinungsform zuliebe als Augen arbeitet, und einen externer Sensor (18) zum Erfassen eines externen Zustands und/oder einer Eingabe von außerhalb hat, aufgezeichnet ist, wobei das Steuerprogramm die Schritte eines Verfahrens nach einem der Ansprüche 9 bis 13 aufweist.

## Revendications

**1.** Robot (1) comprenant :

un moyen électroluminescent (19) destiné à fonctionner comme des yeux pour des raisons d'apparence ;
un capteur externe (18) destiné à détecter une condition externe et/ou une entrée provenant de l'extérieur ; et
un moyen de commande (10) destiné à générer un signal de commande pour ledit moyen électroluminescent, afin d'exprimer une émotion, sur la base d'une sortie dudit capteur externe (18) ;

**caractérisé en ce que** ledit moyen de commande (10) comprend une unité de modèle (31) permettant de modéliser un paramètre variable afin d'exprimer un souhait du robot et de provoquer le fait que ledit signal de commande dépende de l'intensité dudit paramètre variable.

2. Robot selon la revendication 1, dans lequel ledit moyen électroluminescent (19) est une diode électroluminescente.

3. Robot selon la revendication 1 ou la revendication 2, dans lequel ledit moyen de commande (10) est capable de générer un signal de commande qui exprime l'intensité de ladite émotion par un clignotement dudit moyen électroluminescent (19).

4. Robot selon la revendication 1 ou la revendication 2, comprenant une pluralité de moyens électroluminescents (19R, 19G) capables d'émettre de la lumière de couleurs différentes, respectivement, dans lequel ledit moyen de commande (10) est capable de générer un signal de commande qui exprime ladite émotion par la couleur de la lumière clignotante émise par ledit moyen électroluminescent.

5. Robot selon la revendication 1 ou la revendication 2, comprenant une unité de déplacement et un moyen d'entraînement permettant d'entraîner ladite unité de déplacement, dans lequel ledit moyen de commande (10) est capable de générer un signal de commande qui exprime ladite émotion en contrôlant ledit moyen d'entraînement et entraînant ladite unité de déplacement avec un modèle prédéterminé en plus de provoquer le fait que ledit moyen électroluminescent clignote.

6. Robot selon la revendication 1 ou la revendication 2, dans lequel ledit moyen de commande (10) est capable de :

   mettre à jour un modèle d'émotion dans ladite unité de modèle (31) dans laquelle une émotion prédéfinie est modélisée sur la base de la sortie dudit capteur externe (18) ;
   déterminer l'émotion sur la base du modèle d'émotion mis à jour ; et
   faire clignoter ledit moyen électroluminescent (19) de telle sorte que ladite émotion déterminée soit exprimée.

7. Robot selon la revendication 1 ou la revendication 2, dans lequel ledit moyen électroluminescent possède des unités électroluminescentes ayant une pluralité de formes selon ladite émotion à exprimer.

8. Robot selon l'une quelconque des revendications précédentes, dans lequel ledit moyen électroluminescent (19) est placé sur une tête (4) du robot et recouvert par un capot semi-transparent.

9. Procédé de commande destiné à un robot (1) comprenant un moyen électroluminescent (19) destiné à fonctionner comme des yeux pour des raisons d'apparence et un capteur externe (18) destiné à détecter une condition externe et/ou une entrée provenant de l'extérieur, le procédé comprenant la génération (10) d'un signal de commande destiné audit moyen électroluminescent (19), afin d'exprimer une émotion, sur la base d'une sortie dudit capteur externe (18), et le procédé étant **caractérisé par** la modélisation (31) d'un paramètre variable afin d'exprimer un souhait du robot et le fait que ledit signal de commande dépende de l'intensité dudit paramètre variable.

10. Procédé de commande selon la revendication 9, dans lequel l'intensité de ladite émotion est exprimée par un clignotement dudit moyen électroluminescent (19).

11. Procédé de commande selon la revendication 9, destiné à un robot comprenant plusieurs moyens électroluminescents (19R, 19G) qui émettent une lumière de couleurs différentes, respectivement, dans lequel l'émotion est exprimée par la couleur de la lumière clignotante émise par ledit moyen électroluminescent.

12. Procédé de commande selon la revendication 9, destiné à un robot comprenant une unité de déplacement et un moyen d'entraînement permettant d'entraîner ladite unité de déplacement, dans lequel ladite émotion est exprimée en contrôlant ledit moyen d'entraînement et en entraînant ladite unité de déplacement en plus de provoquer le fait que ledit moyen électroluminescent (19) clignote.

13. Procédé de commande selon la revendication 9, comprenant :

   la mise à jour d'un modèle d'émotion, où une émotion prédéfinie est modélisée sur la base de la sortie dudit capteur externe (18);
   la détermination d'une émotion sur la base du modèle d'émotion mis à jour ; et

le clignotement dudit moyen électroluminescent (19) de telle sorte que ladite émotion déterminé soit exprimée.

14. Support d'enregistrement dans lequel un programme de commande destiné à un robot (1) ayant un moyen électroluminescent (19) destiné à fonctionner comme des yeux pour des raisons d'apparence et un capteur externe (18) destiné à détecter une condition externe et/ou une entrée provenant de l'extérieur est enregistré, le programme de commande comprenant les étapes d'un procédé selon l'une quelconque des revendications 9 à 13.

FIG. 1

1 PET ROBOT

FIG. 2

FIG. 3

17

16

4

16

a

19 { 19R₂
        19G₂

19R₁
19G₁ } 19

15

FIG. 4

FIG. 5

S1 → **CONDITION RECOGNITION UNIT** 30

S2 →

S10 → **EMOTION/ INSTINCT MODEL UNIT** 31

**ACTION DETERMINING UNIT** 32

S11

S11 → **ACTION FORMING UNIT** 33

S12 (S12$_1$ ~ S12$_n$)

→ S3

→ S4

EP 1 120 740 B1

♡ AN EMOTIONAL ACTION TO EXPRESS THE INFORMATION
INPUT IS USEFUL

(CAUSE)
·WHEN ENTERING THE RESOLVING ACTION AT THE TIME
WHEN THE DESIRE OF THE INSTINCT MODEL IS STRONG.
·WHEN IT FINDS ITS FAVORITE COLOR.
·WHEN IT IS PATTED.

SADNESS:AN EMOTIONAL ACTION THAT OCCURS WHEN
THE INFORMATION ENTERED IS NOT FAVORABLE, OR THE
ROBOT IS EXPECTING THE INFORMATION THAT HAS NOT
BEEN ENTERED AND THE ROBOT HAS NO HOSTILITY TOWARD
THE OUTSIDE.

(CAUSE)
·WHEN THE ROBOT HAS NOT RECOGNIZED THE HUMAN
BEING AND THE HUNGER AND THE DESIRE FOR LOVE
ARE NOT REMOVED.

ANGER:AN EMOTIONAL ACTION THAT OCCURS WHEN THE
INFORMATION ENTERED IS NOT FAVORABLE, OR THE ROBOT
IS EXPECTING THE INFORMATION THAT HAS NOT BEEN
ENTERED AND WHEN THE ROBOT HAS HOSTILITY TOWARD
THE OUTSIDE.

(CAUSE)
·WHEN ITS HUNGER AND/OR DESIRE FOR LOVE ARE NOT
REMOVED AFTER RECOGNIZING THE HUMAN BEING.
·WHEN THE DESIRE FOR EXERCISE BECOMES VERY
HIGH AFTER IT HAS BEEN IN A STATE NOT BEING
PUT DOWN FROM THE STATION.
·WHEN THE INFORMATION OTHER THAN THE HEAD TOUCH
SENSOR ENTERS DURING THE SPECIFIED ACTION.
·WHEN IT IS HIT.

SURPRISE:AN EMOTIONAL ACTION TO CONDUCT AN
EMERGENCY PROCESSING BY STOPPING THE CURRENT
ACTION.

(CAUSE)
·WHEN THE ROBOT RECEIVES INFORMATION FROM THE
USER AFTER NO INPUT HAS BEEN RECEIVED.
·WHEN THE SURROUNDING SOUND IS ENTERED.

FEAR:AN EMOTIONAL ACTION TO SHUT DOWN THE
COMMUNICATION WITH THE OUTSIDE WHEN THE ROBOT IS
IN DANGER AND/OR TO ESCAPE FROM SOMETHING WRONG.

(CAUSE)
·WHEN IT RECOGNIZES A CLIFF.
·WHEN IT FALLS DOWN AND CANNOT RECOVER FROM IT.

DISGUST:AN EMOTIONAL ACTION TO SHUT DOWN THE
COMMUNICATION WITH OUTSIDE WHEN THE ROBOT FEELS
DANGER OF ITS LIFE, AND TO ESCAPE FROM SOMETHING
THAT IS NOT FAVORABLE TO THE ROBOT.

(CAUSE)
·WHEN THE ROBOT RECOGNIZES THE COLOR DISLIKE.
·WHEN THE DISGUST TOWARD THE HUMAN BEING
BECOMES VERY HOT.

FIG. 6

FIG. 7

FIG. 9

EP 1 120 740 B1

|  | NAME OF INPUT EVENT | NAME OF DATA | RANGE OF DATA | TRANSITION PROBABILITY TO OTHER NODE | | | | |
|---|---|---|---|---|---|---|---|---|
| node 100 |  |  |  | A | B | C | D | n |
|  |  |  |  | node 120 | node120 | node 1000 |  | node 600 |
|  |  |  |  | ACTION 1 | ACTION 2 | ACTION 3 |  | ACTION 4 |
| 1 | BALL | SIZE | 0, 1000 | 30% |  |  |  |  |
| 2 | PAT |  |  |  | 40% |  |  |  |
| 3 | HIT |  |  |  |  | 20% |  |  |
| 4 | SOUND |  |  |  |  |  |  | 50% |
| 5 | OBSTACLE | DISTANCE | 0, 100 |  |  |  |  |  |
| 6 |  | JOY | 50, 100 |  |  |  |  |  |
| 7 |  | SUPRISE | 50, 100 |  |  |  |  |  |
| 8 |  | SADNESS | 50, 100 |  |  |  |  |  |
|  |  |  |  |  |  |  |  |  |

NODE OF TRANSITTING END

OUTPUT ACTION

40

FIG. 8

EXPLANATION OF REFERENCE NUMERALS

1 - PET ROBOT, 4 - HEAD UNIT, 4A - SEMI-TRANSPARENT COVER, 10 - CONTROLLER, 10A - TOUCH SENSOR, 15 - CCD CAMERA, 16 - MICROPHONE, 17 - TOUCH SENSOR, $19R_1$, $19R_2$ - RED LED, $19G_1$, $19G_2$ - GREEN LED, $21_1 \sim 21_N$ - ACTUATOR, 30 - CONDITION RECOGNITION UNIT, 31 - EMOTION/INSTINCT MODEL UNIT, 32 - FACTION DETERMINING UNIT, 33 - ACTION FORMING UNIT, 40 - CONDITION TRANSITION TABLE, S3 - AUDIO SIGNAL, S4 - LED DRIVING SIGNAL, S10 - CONDITION RECOGNITION INFORMATION, S11 - ACTION DETERMINING INFORMATION, S12 - DRIVING SIGNAL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63192423 A
- JP 64019492 U